# EUROPEAN PATENT APPLICATION

(11) **EP 1 111 562 A2**
(43) Date of publication of application: **27.06.2001**
(21) Application number: 00311326.3
(22) Date of filing: 18.12.2000
(51) Int. Cl.: G07F 19/00, G07F 7/02

(54) **On-line purchasing system**

(30) Priority: 17.12.1999 GB 9929983
(71) Applicant: UK Smart Limited, London W6 8BS (GB)
(72) Inventor: Sefton, Kevin, Lomdon NW6 3LL (GB)
(74) Representative: Gill, David Alan

(57) **Abstract**

The present invention provides for a computer system comprising electronic means for enabling a user to access providers of goods or services, electronic means for electronically maintaining an account of credits owned by the user, electronic means for enabling the user to purchase goods or services from the said provider using credits, and electronic means for enabling credits to be bought with conventional currency and so as to be added to the users account of credits, and likewise provider for a method of enabling the purchase of goods or services from goods or service providers comprising the steps of maintaining an account of credits owned by a potential purchaser, identifying those goods or service providers allowing for the purchase of goods and services by means of the said credits, allowing the potential purchaser access to the account of credits for purpose of the purchase of the said goods or services, and allowing for credits to be bought with conventional currency and so as to be added to the said account.

## Description

The present invention relates in a first aspect to a system that facilitates the purchasing of goods and/or services to be purchased particularly in an online environment such as the Internet. The invention is particularly advantageous as it enables members of the public who do not have credit cards such as children and young adults to make purchases particularly in the online environment. In a preferred arrangement it relates to a computer system which enables such purchases to be made.

The Internet is a packet switch network which allows data to be routed throughout the world wide web (WWW). For ease of reference, the information of the world wide web and the systems of the Internet will separately and collectively be referred to as "the Internet". As computer technology has advanced such that powerful computers are available to consumers at a reasonable price, the ownership and use of computers in the home has become widespread. Further, the majority of these computers now have internet access which enables the home user to access the full range of information and services available in this forum.

As the Internet has become more widely accepted as an information and service medium, it is becoming more common for consumers to make purchases via the Internet and the purchase of goods and services via the Internet has become more acceptable to the general public. This trade in goods and services via the Internet is often referred to as e-commerce.

However, to take advantage of e-commerce sites, it is generally necessary for the consumer to use a credit card to pay for the goods or services. This means that some members of the public cannot take advantage of the e-commerce opportunities available on the Interent. Particularly excluded are children and young adults who cannot obtain credit cards.

In order to overcome the above-mentioned difficulties and drawbacks there is provided computer technology, including computer networks and a system which enables a consumer to make payments for goods and services without the need for a credit card. As it is likely that the system will be particularly attractive to children and young adults, the description of the invention will be made with reference to a child. It will be understood that the reference to "child" should not be taken as limiting. Similarly, where reference is made to "parent", the parent may not be a biological parent but can be any adult having care of the child.

The computer system and method of the preferred embodiment uses computer technology in a unique way to enable a child to shop on the Internet.

Thus according to a first aspect of the present invention there is provided a computer system comprising:
electronic means for enabling a child user to access and interact with the internet;
electronic means for electronically maintaining an account of credits owned by the child;
electronic means to enable the child user to purchase goods or services from the internet using the credits; and
electronic means to enable credits to be added to the child's account of credits.

In outline, the system of the present invention allows that credits can be purchased for the child by a parent, another adult or in one arrangement the child himself and a balance of these credits may be held in an account. The child may then spend these credits at retail sites which accept the credits. Subject to certain safeguards which are discussed in more detail below, the child can generally make their purchase from the full range of goods or services offered by the proprietor of the site at which the credits are accepted. It will be understood that the goods that the child may purchase may include downloads such as computer software, computer games, music, publications and video.

Generally, the parent or other adult will purchase the credits on line for the child using the parent's credit or debit card in any conventional manner used for online transactions. However in an alternative or additional arrangement, adults will be able to purchase the credits using other payment methods and at conventional retail outlets, banks or other outlets.

The child, in a particularly preferred arrangement, may also be able to purchase credits themselves. For example, where a child is given money, or earns money, they can spend it in conventional retail outlets however it is not in a form that they can spend in the online environment. Therefore the child may purchase credits for themselves so that they can make purchases online by purchasing the credits using their money at the conventional retail outlets, banks or other outlets.

In a further embodiment, the credits purchased by an adult such as a grandparent and the like in addition to being entered into the child's credit account, may be provided as a voucher or the like so that a tangible embodiment of the credit can be presented to the child. This particularly attractive when the child is being given credits as a gift for a birthday or other special occasion.

In one arrangement of the present system, a host operator will provide a host server through which the database of the credits can be maintained. There will be a host website associated with the host server which provides a user interface and provides a vehicle for the registration of the child as a credit account holder and allows them to monitor their account balance. When the child registers with the host website, they will generally be asked to provide their name, address for delivery purposes and date of birth and select a password. On further access to the host website, the child will normally be asked for their password before their account can be accessed.

The parent will also preferably register with the host operator via the host website and server. The parent may be offered the opportunity to bar their child from using their credits at selected retail sites. However, in a preferred arrangement, the parent will not be able to access the balance of the child's credits.

In a preferred embodiment, the parent may control the retail outlets in which their child can use their credits. In one arrangement, although not a preferred arrangement, the parent will be able to restrict the kind of goods and services that the child can purchase using their credits.

Where credits are purchased for the child by a parent or other party, the child will generally be notified of the addition to their balance. The notification is generally made by email. Where the purchase of credits are made for the child by a third party, the parent will generally be notified of the addition to the credit balance. Again, notification is generally by email.

There is also provided a method of operating the system of the above-mentioned first aspect in which a credit balance is maintained by a host site, the credits being purchased by a parent or child. Once sufficient credits are accrued, the child may then redeem them in retail outlets which accept the credits. In the most preferred arrangement the retail outlets will be ecommerce websites provided by retailers via the Internet. The host website may provide links to the websites of the retail outlets which accept the credits. However, it will be understood that it is desirable that the child will be able to access the retail sites directly and spend their credits by making selections from the available products.

When a child is shopping at an ecommerce site they will make their selections. Once these selections have been made, they will proceed to the payment part of the site which is often referred to as the checkout page. At the checkout page the child will select the credit of the present invention as their means of payment. The server of the retail website will then contact the host website via the Internet to check that the child has sufficient credits for the transaction and to obtain the delivery address.

In the preferred arrangement in which the parent is able to restrict the child's ability to shop in a particular outlet, the retail website server will also check to see that the child is authorised to shop in that retail outlet.

Where for example the product is restricted to children of a particular age, the communication between the host website and the retail website will also verify that the child is of a suitable age to make the purchase. For example, if a video that is being purchased is certificated by the authorities as only being suitable for children of, for example, 15 years and over, the communication will verify that the child is indeed over 15. It is not envisaged that the child's age or date of birth should be divulged for security reasons. However, the child's age can be protected while still answering the interrogation as to whether the child can purchase goods certificate for a particular age group. The protocol for he transfer of information between the host and the retailer will preferably be a secure protocol.

As a further security measure, the child will preferably be identified by their email address than by their name.

The supply of product to the child will generally be direct from and the responsibility of the retailer.

In one arrangement, the child in addition to being able to spend their credits online will also be able to spend them in conventional retail outlets. This can be achieved by a number of methods. In one arrangement, they will be able to print vouchers from the credit host website which they can then take to shops. In a preferred arrangement, the child will have a card, such as a magnetic data card, akin to a credit card, which they can present at the check out in the manner normally used with credit or debit cards. In this connection, the retail outlet may be provided with a special card reader or alternatively, the cards may be accepted by conventional card readers.

The child may also be provided with card reader for home use as an alternative method of checking their balance. A portable card reader may also be provided, for example as part of a mobile telephone to enable the child to check their credit balance whilst out.

It is also possible that credits may be purchased by the purchase of vouchers from retail outlets. In one arrangement, the voucher may carry an identification number which the child on receipt of the voucher enters on the host website and the appropriate amount of credits will then be added to their credit account. Any suitable method for entering this number may be used. For example, the number may be sent to the host server via a telephone or key pad on the card reader.

It will be understood that the access to the Internet may be by any suitable means. For example, access may be via a computer and modem or via a wap portal or other device. Further as convergence occurs, the access may be via television or other suitable medium.

Whilst reference has been made to retail outlets, it will be understood that the credits can be additionally used at service outlets such as cinemas, restaurants and the like.

The present invention will now be described by way of example with reference to the accompanying drawings, in which:
- Figure 1: illustrates the main components required to enable encrypted interserver communication between the retailer site and the host server;

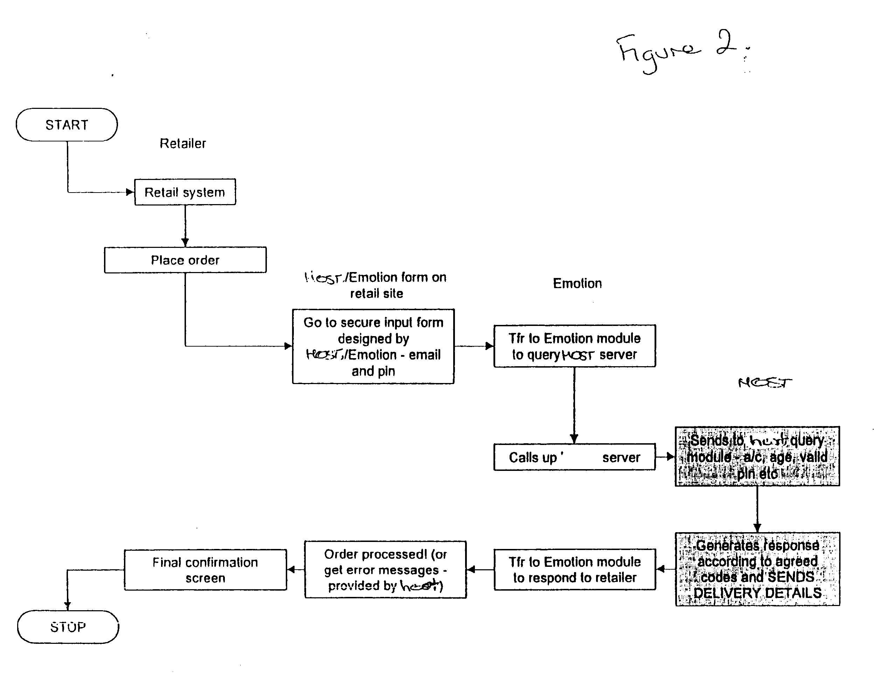

- Figure 2: is a flowchart illustrating the redemption of credits;
- Figure 3: is a flowchart illustrating the detailed steps for 101cd;
- Figure 4: is a flowchart of the reconciliation step; and
- Figure 5: is an overview of the data flow.

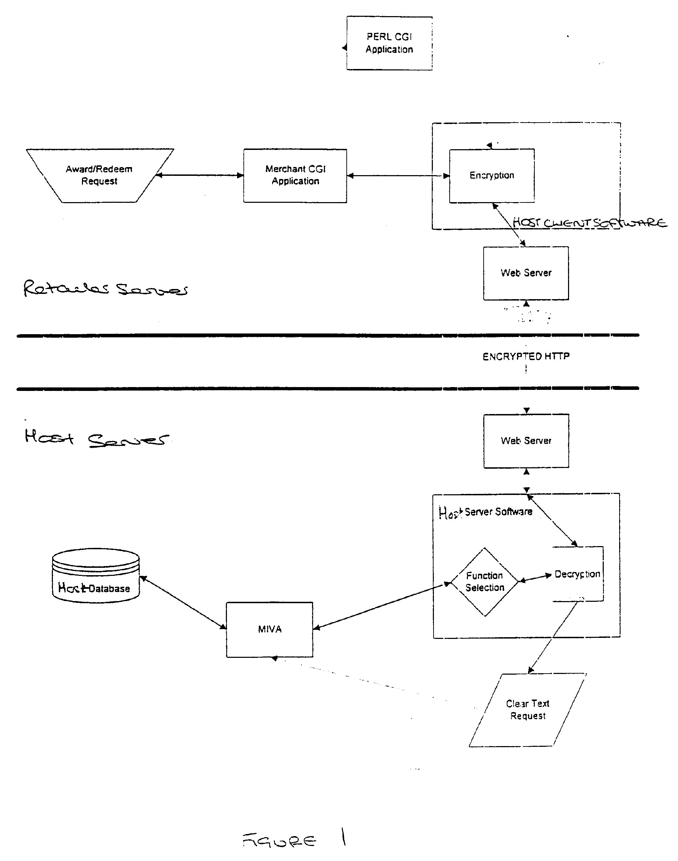

Figure 1 illustrates the main components required to enable the host server to interact with the retailer server. As will be seen, in order to enable the host server to communicate with the web server, software will be provided to the retailer.

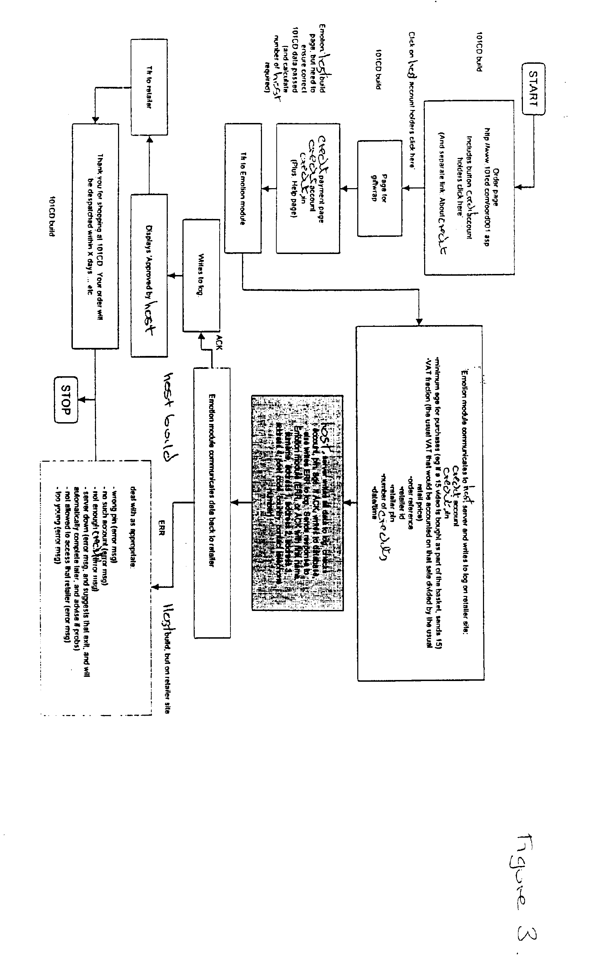

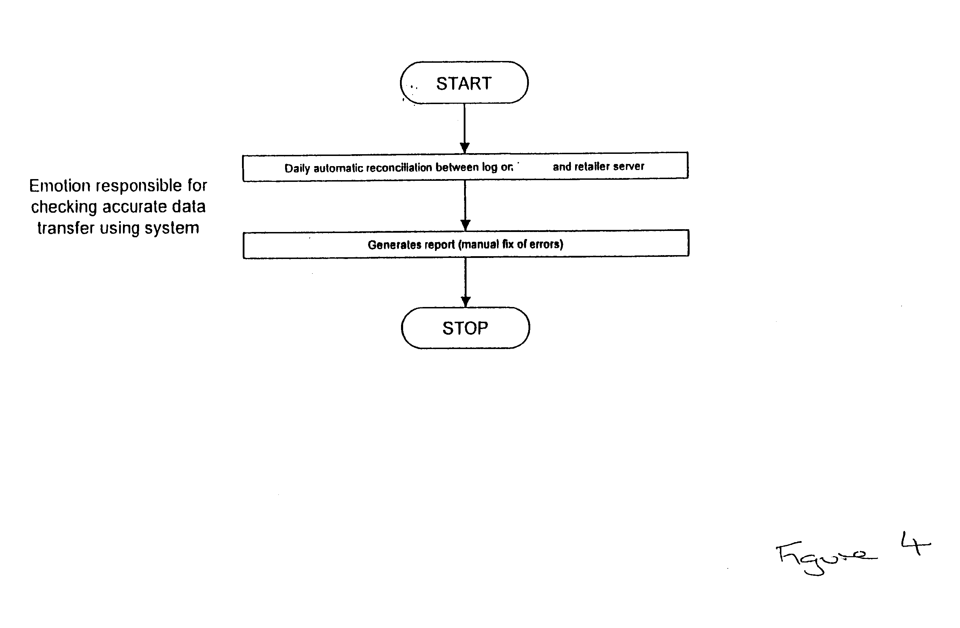

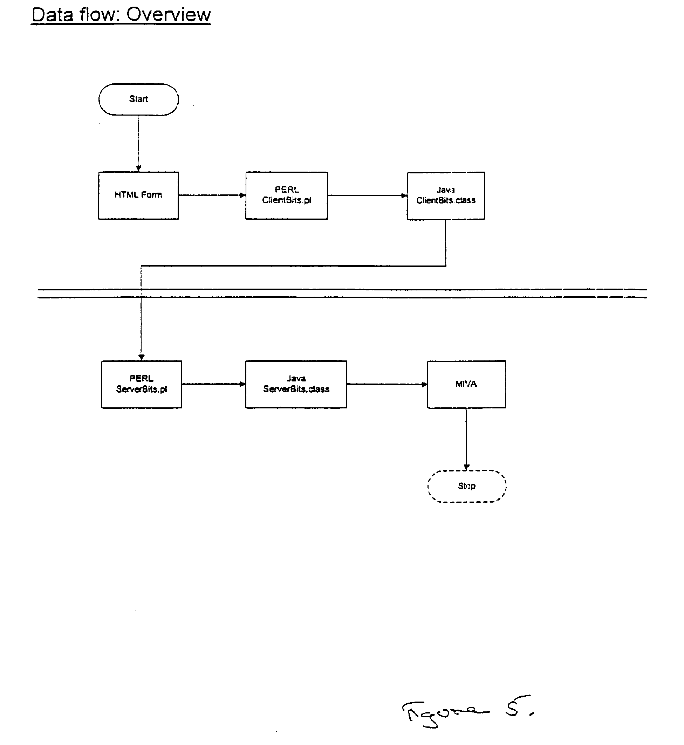

Having registered with the host and having had credits purchased for them or indeed purchasing their own credits, the child will want to redeem these. Where redemption is to be via the online environment, the child will generally directly access the website of the retailer. Thus there is no requirement for the child to access the retailer site via the host website. When the child is ready to place their order, the retail server will query the host server as described above and as illustrated in the figure. Further information can be found in Figures 3, 4 and 5.

In an alternative arrangement of the present invention, there is a modification of the above-mentioned inventions in which the system is adapted to be a loyalty program.

In conventional retailing, various programs are known which provide frequent customers of a company or other organisation with an opportunity to accrue points or other awards which can then be exchanged for gifts. Such programs are particularly popular with companies as engendering customer loyalty.

One particular example of a loyalty system of this type are the frequency programs which have been developed by the travel industry to promote customer loyalty. One example of this is the "frequent flyer" programs offered by many airlines. In these systems, when a flight is booked, mileage points are calculated based on the distance of the flight. When sufficient mileage points have been collected, the user can redeem these for a range of items offered by the airline or the operating company, these may include free flights, hotel stays, gifts and activity days.

Similar systems are often operated by other service providers such as credit card companies.

In such systems, it is usual that if a participant qualifies for an award of merchandise, the participant is limited to the merchandise shown in the catalogue. Generally the particular items of merchandise which can be selected will depend on the number of points achieved by the participant. Thus a participant who has achieved a high number of points under the incentive program can select more valuable gift, or a large number of gifts, than one having a lower accumulation of points.

One system that is suitable for use in an online environment such as the Internet is described in US 5774870. In this patent, an on-line frequency award program is described in which a user accesses a program on-line and browses a product catalogue. When a product is purchased from the catalogue, the user is awarded with award points, the number of which are calculated by the program. The number of award points are added to the user's awards account. Once the user has accumulated a sufficient level of award points, they may browse through an award catalogue and electronically redeem the award points to obtain a gift.

Whilst known systems are very popular, they do have certain drawbacks and disadvantages. The main disadvantage is that the catalogue of awards products usually contain a very limited selection of gifts which are not regularly changed or updated. Thus the users may be become bored with having the same gifts from which to make their selections. Further, the available selection may not be of interest to the user. The user then is unable to take advantage of their accrued awards and therefore rather than providing the user with an incentive may become a source of irritation to the user.

In order to overcome the above-mentioned disadvantages and drawbacks there is provided a system, particularly one for use in the online environment, which provides the user full scope to redeem their awards won from a full range of goods. The disclosed invention is also advantageous in that it provides on-line access to product information, allows product purchase, provides award points that are available for redemption and allows the user to redeem the reward points.

Thus credits are accrued by the user which can be redeem at participating retailers for the any of their full range of goods. Thus as an adaptation of the first mentioned invention, the credits are accrued by means of loyalty points. It will be understood that in this arrangement the holder of the account is unlikely to be a child and is more likely to be an adult.

As with the system above, the consumer may "top-up" their credit account by purchasing credits as described above.

## Claims

1. A computer system comprising electronic means for enabling a user to access providers of goods or services, electronic means for electronically maintaining an account of credits owned by the user, electronic means for enabling the user to purchase goods or services from the said provider using credits, and electronic means for enabling credits to be bought with conventional currency and so as to be added to the users account of credits.

2. A system as claimed in claim 1, wherein the electronic means for enabling credits to bought is arranged to allow for on-line purchasing of the said credits.

3. A system as claimed in claim 1, wherein the electronic means for enabling credits to be bought is arranged to be accessed by a user at a conventional retail or service outlet.

4. A system as claimed in claim 1, 2, or 3, wherein the electronic means for electronically maintaining an account comprises a host server arranged to maintain a database of the said credits.

5. A system as claimed in any one of claims 1-4, wherein the said electronic means for enabling access is arranged to provide for controlled access to prevent a users access to undesired goods or services.

6. A system as claimed in claim 5 and including electronic means arranged for the receipt of data serving to control the said access to the said electronic means for enabling the user to purchase goods or services.

7. A system as claimed in any one of claims 1-6 and including electronic access control means arranged with a layer of security allowing only the user access to data identifying the balance in the account of credits.

8. A system as claimed in any one of claims 1-7, and including electronic means for providing a notification of the addition of credits to the account.

9. A system as claimed in any one of claims 1-8, and arranged for use by a child.

10. A system as claimed in any one of claims 1-9, wherein the electronic means for enabling a user to access the providers of goods of services is arranged to allow for interactions with the Internet and wherein the electronic means for enabling the user to purchase goods or services is arranged to allow for the purchase of said goods or services via the Internet.

11. A system as claimed in any one of claims 1 to 10, and including electronic means for the output of a representation of credits within the account and in a form allowing for redemption in person at a conventional goods or services outlet.

12. A method of enabling the purchase of goods or services from goods or service providers comprising the steps of:
maintaining an account of credits owned by a potential allowing for the purchase of goods and services by means of the said credits; allowing the potential purchaser access to the account of credits for purpose of the purchase of the said goods or services; and allowing for credits to be bought with conventional currency and so as to be added to the said account. purchaser; identifying those goods or service providers

13. A method as claimed in claim 12, and including the step of preventing the purchase of predetermine goods or services with the credits.

14. A method as claimed in claim 12 or 13, wherein the said purchase of goods or services from the goods or service providers is conducted via the Internet.

15. A method as claimed in any one of claims 12, 13, or 14, and including the step of outputting a representation of credits in the account for redemption by the potential purchaser in person at a conventional goods or services outlet.
